# EUROPÄISCHE PATENTSCHRIFT

(11) **EP 0 717 013 B1**
(45) Veröffentlichungstag und Bekanntmachung des Hinweises auf die Patenterteilung: **23.09.1998**
(21) Anmeldenummer: 95119343.2
(22) Anmeldetag: 08.12.1995
(51) Int. Cl.: C03C 8/16

(54) **Keramische Überzugsmasse**
Ceramic coating composition
Composition de revêtement céramique

(30) Priorität: 14.12.1994 US 355556
(43) Veröffentlichungstag der Anmeldung: 19.06.1996
(73) Patentinhaber: CERDEC AKTIENGESELLSCHAFT KERAMISCHE FARBEN, D-60327 Frankfurt (DE)
(72) Erfinder: Brown, Terry Joseph, Pittsburgh, Pennsylvania 15205 (US)

(56) Entgegenhaltungen:
- DE-A- 2 531 260
- US-A- 5 346 651

## Beschreibung

Die vorliegende Erfindung bietet ein verbessertes Medium oder Trägermittel für keramische Überzugsmassen.

Keramische Überzugsmassen, die für die Herstellung dekorativer und funktioneller Überzüge auf Glas, Porzellan und dergleichen besonders nützlich sind, sind gut bekannt. Diese Massen sind im allgemeinen in der Form von Siebdruckpasten oder Farben für Rollenauftrag verfügbar und müssen spezifische Eigenschaften aufweisen, um ein brauchbares Produkt zu bilden. Besonders wichtig ist die Viskosität des bei der Herstellung der Masse benutzten Mediums oder Trägermittels. Ebenfalls wichtig ist das Feststoffaufnahmevermögen (Verhältnis von Pulver zu Öl) der mit Hilfe des Mediums erzeugten Pastenstoffe. Außerdem bildet das Rheologie- oder Viskositätsprofil der Siebdruckpaste bzw. der Paste für Rollenauftrag einen wichtigen Faktor.

Im allgemeinen setzen sich die keramischen Überzugsmassen aus einer Glasfritte, einem Trägermittel oder Medium und gegebenenfalls einem Pigment zusammen. Typisch wird die Masse in Pastenform durch Siebdruck oder nach einem anderen Auftragverfahren auf ein Substrat wie Kraftwagenglas aufgetragen und das überzogene Substrat erhitzt oder gebrannt, um die Glasfritte zu schmelzen und das Trägermittel oder Medium zu verflüchtigen, so daß der Überzug fest mit der Substratoberfläche verbunden wird.

Die in den keramischen Überzugsmassen bisher verwendeten Trägermittel oder Medien sind typisch organischer Art und umfassen auf Pineölen, pflanzlichen Ölen, mineralischen Ölen, Erdölfraktionen mit niedrigem Molekulargewicht, Tridecylalkohol und dergleichen basierende Massen. Die Trägermittel können durch den Zusatz von viskosen Harzen wie Vinylharzen, Lösungsmitteln, Filmbildnern wie Stoffen auf Cellulosebasis und dergleichen modifiziert werden.

In der Technik besteht ein Bedarf an pastenförmigen keramischen Überzugsmassen mit einem hohen Feststoffgehalt. Dies bedingt Produkte mit einem geringeren Gehalt an flüchtigen organischen Stoffen (VOC = Volatile Organic Content). Der Bedarf an Produkten mit einem geringeren VOC ist besonders hoch bei bleifreie Glasfritten umfassenden keramischen Überzugsprodukten, da diese Produkte eine geringere Dichte aufweisen.

Gegenstand der Erfindung ist eine verbesserte keramische Überzugsmasse, enthaltend eine Glasfritte und ein organisches Medium auf Lösungsmittelbasis, welche dadurch gekennzeichnet ist, daß das organische Medium
- 50 bis 99: Gew.-% Lösungsmittel,
- 0,1 bis 50: Gew.-% Pantothenol,
- 0 bis 45: Gew.-% Bindemittel,
- 0 bis 15: Gew.-% Weichmacher und
- 0 bis 1: 5 Gew.-% Viskositätsmodifizierer
enthält. Die durch die Erfindung bedingte Verbesserung erstreckt sich auf den Gebrauch von Pantothenol (Pantothenylalkohol) als Rheologiemodifizierer in dem Medium, auch Trägermittel genannt.

Pantothenol oder Pantothenylalkohol ist die Verbindung 2.4-Dihydroxy-N-(3-hydroxypropyl)-3.3-dimethylbutanamid. Die Verbindung ist als das racemische (±)-Gemisch verfügbar. Die (+)- und (-)- Enantiomere sind ebenfalls bekannt, und die D(+)-Form wirkt bekanntlich als Vitamin. Erfindungsgemäß kann von dem racemischen Gemisch bzw. von den einzelnen Enantiomeren Gebrauch gemacht werden; das racemische Gemisch wird jedoch aus wirtschaftlichen Gründen bevorzugt.

Eine bevorzugte keramische Überzugsmasse enthält ein organisches Medium, das 70 bis 90 Gew.-% Lösungsmittel, insbesondere solche aus der Reihe der Glykoläther, und 1 bis 10 Gew.-% Pantothenol enthält.

Die Lösungsmittelbasis für das Medium kann einer der Stoffe sein, die bisher auf dem Sektor der keramischen Überzugsmassen verwendet wurden, oder ein Gemisch davon. Beispiele derartiger Stoffe sind Pineöl, Terpineol, Esteralkohole, Alkohole wie Tridecylalkohol, Glykole, Glykoläther, aromatische Kohlenwasserstoffe, isoparaffinische Kohlenwasserstoffe und aliphatische Kohlenwasserstoffe. Besonders geeignet ist Tripropylenglykolmethyläther.

Das Medium umfaßt gegebenenfalls ein oder mehrere Bindemittel in einem Anteil bis zu etwa 45 Gew.-%, vorzugsweise 0 bis 30 Gew.-%. Solche Bindemittel sind in der Technik bekannt. Als Beispiele für solche Bindemittel können Polystyrol und modifiziertes Polystyrol, z.B. piccolastisches Harz; Polyalphamethylstyrol, z.B. Kristalex®-Harz; teilweise hydriertes Harz, z.B. Stabelit®-Harz; Ester von hydriertem Kolophonium, z.B. Stabelit®-Ester; Acrylharze wie Homo- und Copolymere von Methylmethacrylat, Äthylmethacrylat, n-Butylmethacrylat und Isobutylmethacrylat genannt werden.

Gegebenenfalls umfaßt das Medium bis zu etwa 15 Gew.-% eines oder mehrerer Weichmacher. Solche Weichmacher sind in der Technik bekannt und Beispiele dafür bilden Dibutylphthalat, Dioctylphthalat, Tributylphosphat, Stearatverbindungen, Kolophoniummethylester wie Abietinsäuremethylester, Hydroabietylalkohol, wie Abietol, hydrierter Kolophoniummethylester, wie Hercolyn-D und Amine-D.

Als zusätzlichen wahlweisen Bestandteil kann das Medium bis etwa 15 Gew.-%, vorzugsweise 0,1 bis 5 Gew.-%, eines oder mehrerer Viskositätsmodifizierer enthalten. Solche Modifizierer sind in der Technik ebenfalls bekannt und Beispiele dafür bilden Äthylcellulose, Nitrocellulose, Hydroxypropylcellulose, Hydroxypropylmethylcellulose, Acrylharze, Poly(vinyl)butyralharze, Carboxymethylcellulose und Äthylhydroxyäthylcellulose.

Das Medium kann auch weitere modifizierende Bestandteile enthalten, insofern solche erwünscht sind, wie z.B. ein Dispergiermittel bzw. ein Geruchmaskiermittel. Solche Stoffe sind in der Technik bekannt, und es kann von beliebigen der bekannten Stoffe Gebrauch gemacht werden, vorausgesetzt daß diese mit den anderen Bestandteilen des Medium kompatibel sind.

Das Medium kann dadurch zubereitet werden, daß man die erforderlichen Bestandteile vereinigt und, falls erforderlich, erhitzt, um alle Bestandteile in Lösung zu bringen. So werden der Lösungsmittelbasis z.B. der Pantothenylalkohol und gegebenenfalls das Bindemittel, der Weichmacher und der Viskositätsmodifizierer zugesetzt. Das Gemisch wird auf etwa 65 bis 93 °C erhitzt, bis eine gleichförmige Lösung entsteht. Die Lösung wird dann gekühlt, und es werden zusätzliche wahlweise Bestandteile wie Dispersiermittel und Geruchmaskiermittel eingerührt, um eine gleichförmige Lösung zu erzielen.

Das auf diese Weise gebildete Medium oder Trägermittel kann als das organische Medium oder Trägermittel für die Zubereitung einer erfindungsgemäßen keramischen Überzugsmasse benutzt werden. Durch Verwendung des Pantothenol enthaltenden Mediums läßt sich eine Überzugsmasse herstellen, bei der der Feststoffgehalt viel höher, die Dichte des durch Siebdruck oder Rollenauftrag erzeugten Films höher und der VOC-Wert infolge des höheren Anteils an Feststoffen geringer ist. Außerdem ist bei der erzielten keramischen Überzugsmasse die Viskositätsstabilität auf die Dauer besser. Die höhere Dichte des aufgedruckten Films hat zur Folge, daß bei den gebrannten Filmen die Lichtdurchlässigkeit geringer und die Opazität besser ist.

Das Medium hat eine sehr geringe Viskosität und gestattet die Herstellung einer erfindungsgemäßen keramischen Überzugsmasse mit ausgezeichneter Viskositätstabilität, die sich während der Lagerung weder zersetzt noch absetzt.

Das Pantothenol enthaltende Medium kann zur Herstellung keramischer Überzugsmassen der z.B. in den US-Patenten 4,959,090 , 4,970,178 und 4,892,847 offenbarten Art verwendet werden. Diese sind natürlich ausschließlich als Beispiele angeführt und für die Massen, in denen das erfindungsgemäße Medium verwendet werden kann, nicht erschöpfend.

Das Medium kann auch bei der Herstellung keramischer metallisierender Massen verwendet werden, die sich zur Erzeugung von aufgebrannten elektrisch leitfähigen Filmen eignen. Siehe z.B. die US-Patente 4,098,949 , 4,369,063 , 4,029,605 und 5,346,651.

Das Pantothenol enthaltende Medium ist besonders nützlich zur Herstellung erfindungsgemäßer keramischer Überzugsmassen, bei denen die benutzte Glasfritte eine bleifreie Glasfritte ist. Solche Massen und die bleifreien Glasfritten sind gut bekannt.

Die keramischen Überzugsmassen können außer einer Glasfritte und einem Medium oder Trägermittel ein Pigment enthalten. Bei den metallisierenden Massen ist auch fein verteiltes elektrisch leitfähiges Metall wie Silber vorhanden. Für die Regelung der Eigenschaften der Masse können andere Bestandteile verwendet werden, wie dies in der Technik bekannt ist. Die durch die vorliegende Erfindung bedingte Verbesserung besteht in dem Gebrauch eines Pantothenol enthaltenden Mediums in keramischen Überzugsmassen.

Es ist auch zu beachten, daß das Pantothenol enthaltende Medium unabhängig als ein separates Produkt vorgesehen werden kann, das sich als Verdünnungsmittel für die keramischen Überzugsmassen benutzen läßt. Die Überzugs- bzw. Aufdruckeigenschaften solcher Überzugsmassen können daher durch Zusatz der gewünschten Menge des Mediums zu einer solchen Masse zur Zeit der Verwendung eingestellt werden.

Die nachstehenden Beispiele sollen die Erfindung veranschaulichen. Man beachte, daß diese Beispiele rein veranschaulichender Art und für die Erfindung nicht erschöpfend sind.

### Beispiel 1

Es wurden 35,192 Gewichtsteile Tripropylenglykolmethyläther (Arcosolve® TPM) in einen Behälter eingeführt, und Erhitzung wurde eingeleitet. Es wurden DL Pantothenol Cosmetic Grade (2,736 Gewichtsteile) und Hydroxypropylcellulose (1,408 Gewichtsteile Klucel® E) unter Rühren in den Behälter eingeführt, und es wurde mit Erhitzung fortgesetzt, bis die Temperatur des Gemisches 79,5 °C erreichte. Sobald das Pantothenol und das Klucel® E in den Lösungszustand übergingen, wurde der Erhitzungvorgang abgebrochen. Man ließ das Gemisch 40 Minuten lang abkühlen. Zu diesem Zeitpunkt wurden 0,604 Gewichtsteile Dispergiermittel (Disperbyk® 110, ein gesättigter Polyester mit acidischen Gruppen) und 0,06 Gewichtsteile eines Geruchmaskiermittels (Fresh Linen® 6503/2) unter Rühren zugesetzt. Das bewirkte Gemisch wurde durch ein 325-Mesh-Sieb filtriert, um das Pantothenol enthaltende Medium zu erzielen.
Klucel® E ist ein Handelsname der Aqualon
Company.Arcosolve® TPM ist ein Handelsname der ARCO Chemical Co.
Disperbyk® 110 ist ein Handelsname der BYK Chemie, Additives Division.
Fresh Linen® 6503/2 ist ein Handelsname der Givaudan-Rouche.

### Beispiel 2

Es wurde unter Verwendung des nach Beispiel 1 hergestellten Mediums eine schwarze keramische Überzugsmasse zubereitet. Mit dem nach Beispiel 1 hergestellten Medium wurde schwarze Glasfritte und Pigmente enthaltendes Emailpulver vereinigt und bis zu Homogeneität gemischt. Nach dem Mischen wurde die anfallende Paste mit Hilfe einer Dreiwalzenmühle gemahlen. Der Feststoffanteil der anfallenden Paste beträgt 82 bis 84 Gewichtsprozent und der Mediumanteil 16 bis 18 Gewichtsprozent.

Zusammensetzung des schwarzen Emailpulvers:
- 75,75: Gew.-% Glasfritte (1)
- 15,15: Gew.-% schwarzes Pigment Nr. 1 (2)
- 9,11: Gew.-% schwarzes Pigment Nr. 2 (3)

(1) Zusammensetzung der Fritte:
   - PbO: 61,09 Gew.-%
   - SiO₂: 29,23 Gew.-%
   - Na₂O:B₂O₃: 5,62 Gew.-%
   - ZrO₂:SiO₂: 1,92 Gew.-%
   - Na₂CO₃: 1,13 Gew.-%
(2) Schwarzes Pigment Nr. 1 - Cr-, Cu-Oxid-Spinell
(3) Schwarzes Pigment Nr. 2 - Ni-, Mn-, Fe-, Cr-Oxid-Spinell

### Beispiel 3

Die nach Beispiel 2 hergestellte schwarze keramische Überzugsmasse wurde durch Siebdruck auf Geräteglas aufgetragen. Es wurde festgestellt, daß das Druckbild sehr scharf ist. Das Glas mit dem aufgetragenen Überzug wurde auf herkömmlicher Weise vier bis sechs Minuten lang bei einer Temperatur von 649 bis 677 °C gebrannt, um ein überzogenes Geräteglasprodukt mit scharfem Druckbild zu erzielen.

Die schwarze keramische Überzugsmasse kann auch zum Überziehen von Kraftwagenglas, wie Windschutzscheiben und Heckfenstern, verwendet werden.

## Patentansprüche

1. Keramische Überzugsmasse, enthaltend eine Glasfritte und ein organisches Medium auf Lösungsmittelbasis, dadurch gekennzeichnet, daß das organische Medium
50 bis 99 Gew.-% Lösungsmittel,
0,1 bis 50 Gew.-% Pantothenol,
0 bis 45 Gew.-% Bindemittel,
0 bis 15 Gew.-% Weichmacher und
0 bis 15 Gew.-% Viskositätsmodifizierer
enthält.

2. Keramische Überzugsmasse nach Anspruch 1,
dadurch gekennzeichnet,
daß das organische Medium 70 bis 90 Gew.-% organische Lösungsmittel aus der Reihe der Glykolether und 1 bis 10 Gew.-% Pantothenol enthält.

3. Keramische Überzugsmasse nach Anspruch 1 oder 2,
dadurch gekennzeichnet,
daß sie Hydroxypropylcellulose als Viskositätsmodifizierer enthält.

4. Keramische Überzugsmasse nach einem der Ansprüche 1 bis 3,
dadurch gekennzeichnet,
daß sie des weiteren ein Dispergiermittel und ein Geruchmaskiermittel enthält.

5. Keramische Überzugsmasse nach einem der Ansprüche 1 bis 4,
dadurch gekennzeichnet,
daß sie des weiteren ein Pigment enthält.

6. Keramische Überzugsmasse nach einem der Ansprüche 1 oder 5,
dadurch gekennzeichnet,
daß sie des weiteren ein fein verteiltes elektrisch leitfähiges Metall enthält.

7. Keramische Überzugsmasse nach einem der Ansprüche 1 bis 6,
dadurch gekennzeichnet,
daß sie eine Glasfritte und Pigmente in einer Menge von zusammen 82 bis 84 Gew.-% und ein Panthothenol enthaltendes organisches Medium in einer Menge von 16 bis 18 Gew.-% enthält.

8. Verfahren zur Herstellung eines mit einer keramischen Überzugsmasse überzogenen Glassubstrats, umfassend den Auftrag einer keramischen Überzugsmasse auf mindestens einen Teil eines Glassubstrats und danach Brennen des besagten überzogenen Substrats, um den besagten Überzug mit dem besagten Substrat zu verschmelzen,
dadurch gekennzeichnet,
daß man eine keramische Überzugsmasse nach einem der Ansprüche 1 bis 7 verwendet.

9. Überzogenes Glassubstrat,
dadurch gekennzeichnet,
daß es nach dem Verfahren nach Anspruch 8 hergestellt worden ist.

## Claims

1. Ceramic coating composition, containing a glass frit and a solvent-based organic medium, characterised in that
the organic medium contains
50 to 99 wt.% solvent,
0.1 to 50 wt.% pantothenol,
0 to 45 wt.% binder,
0 to 15 wt.% plasticiser and
0 to 15 wt.% viscosity modifier.

2. Ceramic coating composition according to claim 1,
characterised in that
the organic medium contains 70 to 90 wt.% organic solvents selected from amongst the glycol ethers and 1 to 10 wt.% pantothenol.

3. Ceramic coating composition according to claim 1 or 2,
characterised in that
it contains hydroxypropyl cellulose as viscosity modifier.

4. Ceramic coating composition according to one of claims 1 to 3,
characterised in that
it contains in addition a dispersing agent and a deodorant.

5. Ceramic coating composition according to one of claims 1 to 4,
characterised in that
it contains in addition a pigment.

6. Ceramic coating composition according to one of claims 1 or 5,
characterised in that
it contains in addition a finely-divided, electrically conductive metal.

7. Ceramic coating composition according to one of claims 1 to 6,
characterised in that
it contains a glass frit and pigments in a quantity all together of from 82 to 84 wt.% and a pantothenol-containing organic medium in a quantity of from 16 to 18 wt.%.

8. A process for the production of a glass substrate coated with a ceramic coating composition, comprising the application of a ceramic coating composition to at least a part of a glass substrate and thereafter firing of the said coated substrate, in order to fuse the said coating with the said substrate,
characterised in that
a ceramic coating composition according to one of claims 1 to 7 is used.

9. Coated glass substrate,
characterised in that
it has been produced by the process according to claim 8.

## Revendications

1. Composition de revêtement ou enduction céramique contenant une fritte de verre et un milieu organique à base de solvants,
caractérisée en ce que le milieu organique contient
50 à 99 % en poids de solvant,
0,1 à 50 % en poids de pantothénol
0 à 45 % en poids de liant,
0 à 15 % en poids de plastifiant et
0 à 15 % en poids de modifiant de viscosité.

2. Composition de revêtement ou enduction céramique selon la revendication 1,
caractérisée en ce que
le milieu organique comprend 70 à 90 % en poids de solvants organiques de la série des éthers de glycol et 1 à 10 en poids de patothénol.

3. Composition de revêtement ou enduction céramique selon la revendications 1 ou 2,
caractérisée en ce qu'
elle contient de l'hydroxypropylcellulose comme modifiant de viscosité.

4. Composition de revêtement ou enduction céramique selon l'une des revendications 1 à 3,
caracterisée en ce qu'
elle contient en outre un dispersant et un agent de masquage d'odeur.

5. Composition de revêtement ou enduction céramique selon l'une des revendications 1 à 4,
caractérisée en ce qu'
elle contient en outre un pigment.

6. Composition de revêtement ou enduction céramique selon l'une des revendications 1 ou 5,
caractérisée en ce qu'
elle contient en outre un métal électriquement conducteur finement dispersé.

7. Composition de revêtement ou enduction céramique selon l'une des revendications 1 à 6,
caractérisée en ce qu'
elle contient une fritte de verre et des pigments en une quantité globale de 82 à 84 % en poids et un milieu organique contenant du pantothénol en une quantité de 16 à 18 % en poids.

8. Procédé de préparation d'un substrat de verre revêtu d'une composition de revêtement ou enduction céramique, comprenant le dépôt d'une composition de revêtement ou enduction céramique sur au moins une partie d'un substrat de verre et ensuite la cuisson dudit substrat revêtu, pour fondre le revêtement ou enduction avec le substrat,
caractérisé en ce qu'
on utilise une composition de revêtement ou enduction céramique selon l'une des revendications 1 à 7.

9. Substrat de verre revêtu,
caractérisé en ce qu'
on le prépare selon le procédé de la revendication 8.
